# EUROPÄISCHE PATENTSCHRIFT

(11) **EP 1 780 361 B1**
(45) Veröffentlichungstag und Bekanntmachung des Hinweises auf die Patenterteilung: **05.03.2014**
(21) Anmeldenummer: 06022360.9
(22) Anmeldetag: 25.10.2006
(51) Int. Cl.: F16H 25/20, E05F 15/12

(54) **Antriebsanordnung zur motorischen Betätigung eines Funktionselements in einem Kraftfahrzeug**
Drive arrangement for the motorized control of a functional element in a motor vehicle
Dispositif d'actionnement pour l'entraînement motorisé d'un élément fonctionnel dans un véhicule automobile

(30) Priorität: 27.10.2005 DE 202005016953 U
(43) Veröffentlichungstag der Anmeldung: 02.05.2007
(73) Patentinhaber: Brose Schliesssysteme GmbH & Co. KG, 42369 Wuppertal (DE)
(72) Erfinder: Kachouh, Checrallah, 44227 Dortmund (DE)
(74) Vertreter: Gottschald, Jan

(56) Entgegenhaltungen:
- EP-A1- 0 622 260
- DE-A1- 3 216 402
- DE-A1- 4 337 867
- FR-A1- 2 828 231
- US-A- 2 674 453
- US-A- 5 373 754
- US-A- 5 944 376

## Beschreibung

Die Erfindung betrifft eine Antriebsanordnung zur motorischen Betätigung einer Heckklappe in einem Kraftfahrzeug mit den Merkmalen des Oberbegriffs von Anspruch 1.

Im Rahmen der Komforterhöhung bei Kraftfahrzeugen kommt der in Rede stehenden Antriebsanordnung zunehmende Bedeutung zu. Neben hoher Zuverlässigkeit und geringen Kosten spielt die Kompaktheit einer solchen Antriebsanordnung eine wichtige Rolle.

Die bekannte Antriebsanordnung (US 6,516,567 B1), von der die Erfindung ausgeht, zeigt eine Antriebsanordnung zur motorischen Betätigung der Heckklappe eines Kraftfahrzeugs. Die Antriebsanordnung weist zwei Antriebe auf, die an den beiden Seitenrändern der Heckklappe antriebstechnisch angreifen. Die Antriebe weisen jeweils einen Antriebsmotor und ein dem Antriebsmotor nachgeschaltetes Spindel-Spindelmutter-Getriebe auf. Das Spindel-Spindelmutter-Getriebe weist hier wie üblich eine Spindel mit einem Außengewinde auf, das in dem Innengewinde einer Spindelmutter läuft. Durch den Antrieb der Spindel läßt sich das Spindel-Spindelmutter-Getriebe zwischen einem eingezogenen Zustand und einem ausgezogenen Zustand verstellen. Eine lineare Antriebsbewegung, nämlich eine Bewegung der Spindelmutter parallel zur Spindelachse, läßt sich hermit vergleichsweise einfach realisieren.

Nachteilig ist bei der bekannten Antriebsanordnung die Tatsache, daß das Spindel-Spindelmutter-Getriebe im eingezogenen Zustand eine beträchtliche Länge aufweist. Dies liegt daran, daß die Länge der Spindel mindestens der Länge des gewünschten Vorschubwegs entsprechen muß. Dies kostet Bauraum im Innenraum des Kraftfahrzeugs, der grundsätzlich knapp bemessen ist. Die große Ausdehnung der Antriebsanordnung ist auch in ästhetischer Hinsicht problematisch.

Ferner ist zu berücksichtigen, daß jede Heckklappe eines Kraftfahrzeugs eine ganz bestimmte Schließ- und Öffnungscharakteristik aufweist. Dies bedeutet, daß sich der zum Schließen bzw. zum Öffnen der Klappe erforderliche Kraftaufwand über die gesamte Schließ- bzw. Öffnungsbewegung gesehen verändert. Beispielsweise kann es sein, daß zum Öffnen der Heckklappe eines Kraftfahrzeugs anfangs eine besonders hohe Kraft notwendig ist, bis gegebenenfalls vorhandene Gasdruckdämpfer die Öffnungsbewegung unterstützen. Es kann aber auch sein, daß derartige Gasdruckdämpfer nicht vorgesehen sind, so daß der für die Öffnungsbewegung erforderliche Kraftaufwand bei nahezu voll geöffneter Klappe maximal ist. Die Auslegung des Spindel-Spindelmutter-Getriebes einerseits und des Antriebsmotors andererseits stellt daher bei der bekannten Antriebsanordnung allenfalls einen Kompromiß dar. Dieser Kompromiß führt zu hohen Kosten, da der Antriebsmotor für einen beträchtlichen Teil der Verstellbewegung der Heckklappe überdimensioniert ist.

Der Erfindung liegt das Problem zugrunde, die bekannte Antriebsanordnung derart auszugestalten und weiterzubilden, daß mit geringem konstruktivem Aufwand der erforderliche Bauraum reduziert und die konstruktive Auslegung optimiert wird.

Das obige Problem wird bei einer Antriebsanordnung mit den Merkmalen des Oberbegriffs von Anspruch 1 zunächst durch die Merkmale des kennzeichnenden Teils von Anspruch 1 gelöst.

Wesentlich ist die Überlegung, das Prinzip eines mehrstufigen Teleskopauslegers auf das Spindel-Spindelmutter-Getriebe der in Rede stehenden Antriebsanordnung anzuwenden. Dabei wird zwischen die Spindel und die Spindelmutter mindestens eine Teleskophülse geschaltet, durch die das Außengewinde der Spindel gewissermaßen verlängerbar ist. Man könnte auch andersherum sagen, daß die Länge des Innengewindes der Spindelmutter durch die Teleskophülse bzw, die Teleskophülsen verlängerbar ist.

Mit der obigen Integration der Teleskophülse bzw, der Teleskophülsen in das Spindel-Spindelmutter-Getriebe wird im Ergebnis eine Reduzierung der Länge des Spindel-Spindelmutter-Getriebes im eingezogenen Zustand bei unverändert großem Vorschubweg gewährleistet

Das Außengewinde der Spindel sowie das Außengewinde der Teleskophülse bzw. die Außengewinde der Teleskophülsen bilden jeweils eine Gewindepaarung mit einem zugeordneten Innengewinde der Teleskophülse bzw. der Teleskophülsen oder der Spindelmutter. Bei der bevorzugten Ausgestaltung gemäß Anspruch 6 werden bei der motorischen Verstellung der Spindel die einzelnen Gewindepaarungen in einer vorbestimmten Reihenfolge nacheinander durchlaufen. Mit "Durchlaufen einer Gewindepaarung" ist vorliegend gemeint, daß eines der Außengewinde relativ zu dem jeweils zugeordneten Innengewinde rotiert, woraus eine Antriebsbewegung resultiert. Eine Gewindepaarung als solche wirkt in diesem Sinne also wie ein Spindel-Spindelmutter-Getriebe im üblichen Sinne. Durch den teleskopartigen Aufbau ist es so, daß beim Durchlaufen der einen Gewindepaarung die nachfolgende Gewindepaarung und die damit verbundenen Komponenten verschoben werden. Anschließend wird die nachfolgende Gewindepaarung durchlaufen, woraus eine zusätzliche Antriebsbewegung resultiert.

Bei der besonders bevorzugten Ausgestaltung gemäß Anspruch 7 weisen die verschiedenen Gewindepaarungen unterschiedliche Reibwerte auf, wobei die anfangs zu durchlaufende Gewindepaarung einen geringeren Reibwert aufweist als die anschließend zu durchlaufende Gewindepaarung. Beim Antrieb der Spindel wird die Gewindepaarung mit dem geringsten Reibwert zuerst durchlaufen. Bei der bevorzugten Ausgestaltung gemäß Anspruch 8 erfolgt nach dem Durchlaufen einer Gewindepaarung eine Blockierung dieser Gewindepaarung derart, daß anschließend die folgende Gewindepaarung durchlaufen wird.

Das sequentielle Durchlaufen der Gewindepaarungen wird bei der weiter bevorzugten Ausgestaltung gemäß einer ersten Variante gemäß Anspruch 9 für eine optimale Auslegung der Antriebsanordnung ausgenutzt. Hier ist es vorgesehen, daß die verschiedenen Gewindepaarungen unterschiedliche Gewindesteigungen aufweisen, so daß im Ergebnis beim sequentiellen Durchlaufen der Gewindepaarungen unterschiedliche Getriebestufen realisiert sind. Anspruch 9 sieht in einer zweiten Variante vor, daß die Gewindesteigungen der Gewindepaarungen auf die Schließ- und Öffnungscharakteristik des Funktionselements, insbesondere der Klappe des Kraftfahrzeugs, abgestimmt sind, so daß eine Überdimensionierung des Antriebsmotors weitgehend vermieden werden kann.

Besonders kompakt gestaltet sich die bevorzugte Ausgestaltung gemäß Anspruch 12. Hier ist die Spindel, der Antriebsmotor und ein gegebenenfalls vorhandenes Zwischengetriebe mit der gegebenenfalls vorhandenen Kupplung entlang der Spindelachse gesehen unmittelbar hintereinander angeordnet. Eine solche Anordnung erhöht zwar grundsätzlich die Länge des Antriebs. Dies kann allerdings in Kauf genommen werden, da mit der oben beschriebenen, teleskopartigen Ausgestaltung eine ganz erhebliche Reduzierung der Länge des Antriebs verbunden ist. Insgesamt erreicht man mit dieser Anordnung eine hohe Kompaktheit.

Eine Kugelgewindepaarung ist geeignet, eine über die Länge der Kugelgewindepaarung sich verändernde Gewindesteigung zu realisieren. Mit "Kugelgewindepaarung" ist vorliegend der Aufbau nach Art einer Kugelgewindespindel gemeint, bei dem zwischen den beiden korrespondierenden Gewinden, hier zwischen dem Außengewinde der Spindel und dem Innengewinde der Spindelmutter, ein Kugelsatz vorgesehen ist. Vorteilhaft ist insbesondere die Tatsache, daß hiermit eine während der Verstellung des Funktionselements sich stetig verändernde Getriebeübersetzung realisiert werden kann. Hierdurch läßt sich die Auslegung der Antriebsanordnung weiter optimieren.

Im folgenden wird die Erfindung anhand eines Ausführungsbeispiels näher erläutert. In der Zeichnung zeigt
- Fig. 1: den hinteren Teil eines Kraftfahrzeugs mit einer erfindungsgemäßen Antriebsanordnung in einer Seitenansicht,
- Fig. 2: den Antrieb einer erfindungsgemäßen Antriebsanordnung bei im eingezogenen Zustand befindlichem Spindel-Spindelmutter-Getriebe in einer teilweise geschnittenen Darstellung,
- Fig. 3: die Darstellung gemäß Fig. 2 bei im vollständig ausgezogenen Zustand befindlichem Spindel-Spindelmutter-Getriebe,
- Fig. 4: in ganz schematischer Darstellung die wesentlichen Komponenten eines Spindel-Spindelmutter-Getriebes einer erfindungsgemäßen Antriebsanordnung gemäß einer weiteren Ausführungsform und
- Fig. 5: in ganz schematischer Darstellung eine als Kugelgewindepaarung ausgestaltete Gewindepaarung einer erfindungsgemäßen Antriebsanordnung gemäß einer weiteren Ausführungsform.

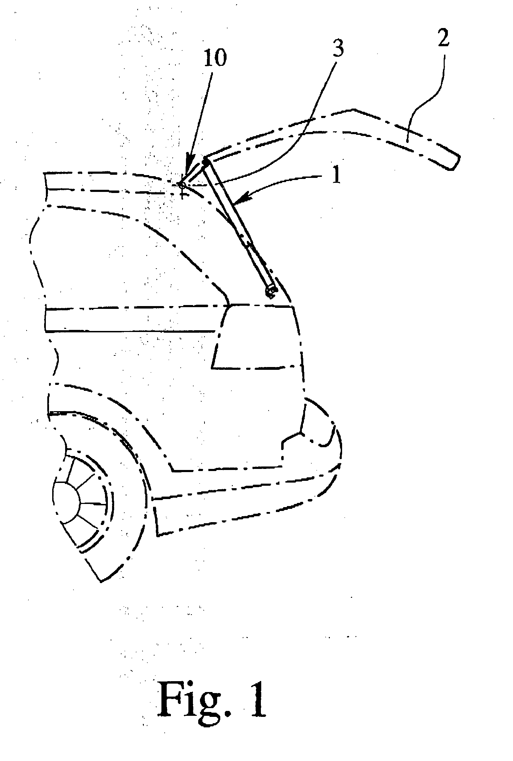

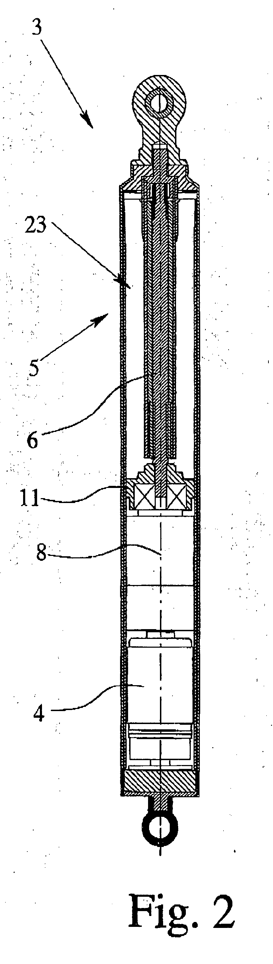

Das in Fig. 1 dargestellte Kraftfahrzeug zeigt eine Antriebsanordnung zur motorischen Betätigung eines Funktionselements 2 in Form einer Heckklappe mit einem Antrieb 3. Der Antrieb 3 ist zur Erzeugung von linearen Antriebsbewegungen mit einem Antriebsmotor 4 und einem dem Antriebsmotor 4 nachgeschalteten Spindel-Spindelmutter-Getriebe 5 ausgestattet. Es ist der Darstellung in Fig. 2 zu entnehmen, daß das Spindel-Spindelmutter-Getriebe 5 eine Spindel 6 mit einem Außengewinde 6a und einer Spindelmutter 7 mit einem Innengewinde 7a aufweist. Die lineare Antriebsbewegung ist, wie bei Spindel-Spindelmutter-Getrieben grundsätzlich üblich, eine Bewegung der Spindelmutter 7 parallel zur Spindelachse 8.

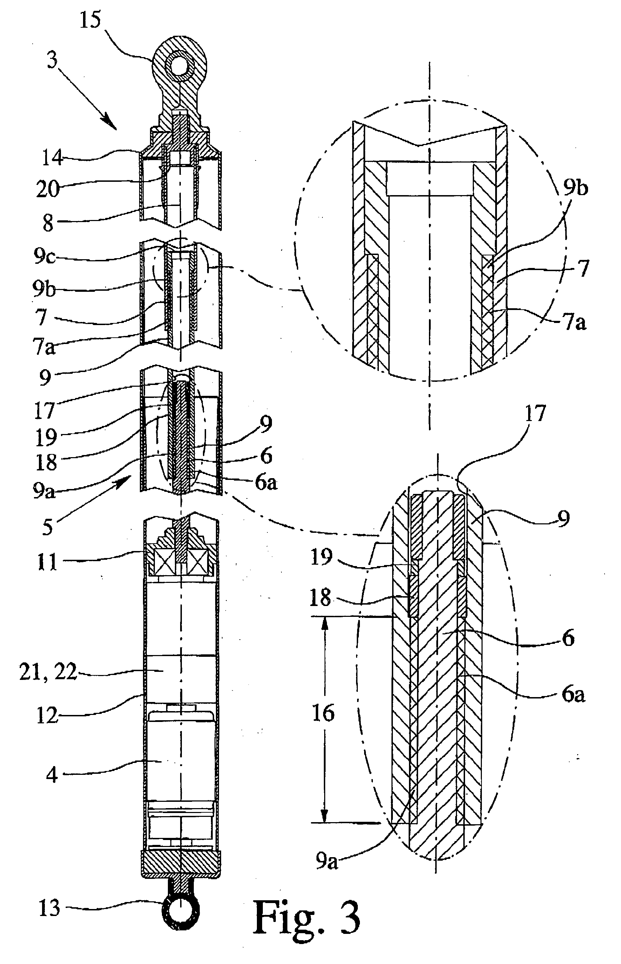

Bei dem Spindel-Spindelmutter-Getriebe 5 handelt es sich gegenüber bekannten Spindel-Spindelmutter-Getrieben insoweit um eine modifizierte Anordnung, als hier mindestens eine Teleskophülse 9 mit einem Innengewinde 9a und einem Außengewinde 9b vorgesehen ist, die zwischen die Spindel 6 und die Spindelmutter 7 geschaltet ist. Dies ist einer Zusammenschau der Fig. 2 und 3 zu entnehmen. Hier ist es so, daß innen die Spindel 6, weiter außen die Teleskophülse 9 und ganz außen die Spindelmutter 7 teleskopartig und ineinanderschraubbar angeordnet sind, so daß jedes Außengewinde 6a, 9b mit dem jeweils benachbarten Innengewinde 9a, 7a eine Gewindepaarung bildet. Die Angaben "innen" und "außen" beziehen sich hier jeweils auf eine hinsichtlich der Spindelachse 8 radiale Richtung. Mit einer "teleskopartigen Anordnung" ist gemeint, daß die betroffenen Komponenten 6, 7, 9 konzentrisch zur Spindelachse 8 angeordnet sind, so daß sie nach Art eines mehrstufigen teleskopartigen Auslegers ineinander geschachtelt werden können. Mit "Gewindepaarung" ist schließlich gemeint, daß das jeweilige Außengewinde 6a, 9b mit dem jeweils benachbarten Innengewinde 9a, 7a in Gewindeeingriff steht. Die Funktionsweise dieses modifizierten Spindel-Spindelmutter-Getriebes 5 wird weiter unten noch im Detail erläutert. Bei dem Funktionselement 2 kann es sich grundsätzlich um irgendein Funktionselement in einem Kraftfahrzeug handeln. Beispiele hierfür wurden weiter oben bereits gegeben. Vorzugsweise handelt es sich bei dem Funktionselement 2 um eine Klappe eines Kraftfahrzeugs, wobei der Begriff "Klappe" umfassend zu verstehen ist. Hierunter fällt vorliegend die Heckklappe oder der Heckdeckel eines Kraftfahrzeugs, aber auch die Seitentür oder das Hubdach eines Kraftfahrzeugs.

Bei dem dargestellten und insoweit bevorzugten Ausführungsbeispiel handelt es sich bei dem Funktionselement 2 um eine Heckklappe 2 eines Kraftfahrzeugs. Die Heckklappe 2 ist an der Karosserie des Kraftfahrzeugs um eine Schwenkachse 10 schwenkbar angelenkt, wodurch eine Klappenöffnung der Karosserie verschließbar ist. Die Antriebsanordnung 1 kann hier einen einzigen Antrieb 3 aufweisen, der an einem Seitenrand der Heckklappe 2 antriebstechnisch angreift. In besonders bevorzugter Ausgestaltung ist es jedoch so, daß zwei Antriebe 3 vorgesehen sind und daß die beiden Antriebe 3 an den beiden Seitenrändern der Heckklappe 2 antriebstechnisch angreifen. Dies ist vor dem Hintergrund eines ungewünschten Verwindens der Heckklappe 2 besonders vorteilhaft.

Bei dem dargestellten und insoweit bevorzugten Ausführungsbeispiel ist die Spindel 6 in einem Lagerbock 11 drehbar gelagert. Der Lagerbock 11 befindet sich in einem Spindelgehäuse 12, an dem ein erster Kraftangriffspunkt 13 des Spindel-Spindelmutter-Getriebes 5 angeordnet ist. Der Lagerbock 11 ist im eingebauten Zustand zusammen mit dem Spindelgehäuse 12 und dem ersten Kraftangriffspunkt 13 verdrehfest angeordnet. Die Spindel 6 ist antriebstechnisch mit dem Antriebsmotor 4 gekoppelt.

Die Spindelmutter 7 ist in einem Spindelmuttergehäuse 14 angeordnet, wobei am Spindelmuttergehäuse 14 der zweite Kraftangriffspunkt 15 des Spindel-Spindelmutter-Getriebes 5 angeordnet ist. Auch das Spindelmuttergehäuse 14 mit dem Kraftangriffspunkt 15 ist im eingebauten Zustand verdrehfest angeordnet. Bei der Erzeugung von Antriebsbewegungen durch den Antriebsmotor 4 erfolgt eine lineare Relativbewegung der beiden Kraftangriffspunkte 13, 15 zueinander. Die Kraftangriffspunkte 13, 15 sind im eingebauten Zustand an der Heckklappe 2 einerseits und an der Karosserie des Kraftfahrzeugs andererseits festgelegt. Es ist den Darstellungen in Fig. 2 und 3 zu entnehmen, daß das Spindelmuttergehäuse 14 zu dem Spindelgehäuse 12 überlappend angeordnet ist, so daß die innenliegenden Komponenten vor Verschmutzung geschützt sind. In diesem Zusammenhang darf darauf hingewiesen werden, daß das Innengewinde 7a der Spindelmutter grundsätzlich auch als Bestandteil des Spindelmuttergehäuses 14 ausgestaltet sein kann.

Bei dem dargestellten und insoweit bevorzugten Ausführungsbeispiel ist es so, daß eine einzige Teleskophülse 9 vorgesehen ist, daß das Außengewinde 6a der Spindel 6 in dem Innengewinde 9a der Teleskophülse 9 läuft und daß das Au-βengewinde 9b der Teleskophülse 9 in dem Innengewinde 7a der Spindelmutter 7 läuft. Dadurch läßt sich das Spindel-Spindelmutter-Getriebe 5 durch ein Rotieren der Spindel 6 grundsätzlich von dem in Fig. 2 dargestellten, eingezogenen Zustand in den in Fig. 3 dargestellten, ausgezogenen Zustand bringen. Es ist der Darstellung in Fig. 3 zu entnehmen, daß die Teleskophülse 9 im ausgezogenen Zustand des Spindel-Spindelmutter-Getriebes 5 gewissermaßen eine Verlängerung des Außengewindes 6a der Spindel 6 darstellt. Umgekehrt könnte man auch sagen, daß die Teleskophülse 9 eine Verlängerung des Innengewindes 7a der Spindelmutter 7 darstellt. Damit wird gewährleistet, daß trotz der geringen Länge des Spindel-Spindelmutter-Getriebes 5 ein erheblicher Vorschubweg realisierbar ist.

In weiter bevorzugter Ausgestaltung kann es auch vorgesehen sein, daß mindestens zwei teleskopartig und ineinanderschraubbar angeordnete Teleskophülsen vorgesehen sind, wobei dann das Außengewinde der Spindel in dem Innengewinde der innenliegenden Teleskophülse läuft und das Außengewinde der außenliegenden Teleskophülse in dem Innengewinde der Spindelmutter läuft. Hiermit ist grundsätzlich eine beliebige Verlängerung des Vorschubwegs möglich, solange die Anforderungen an die Stabilität der Anordnung gewährleistet sind.

Die Anordnung ist nun so getroffen, daß bei der motorischen Verstellung der Spindel 6 die einzelnen Gewindepaarungen in einer vorbestimmten Reihenfolge nacheinander durchlaufen werden. Dabei ist es vorzugsweise vorgesehen, daß während des Durchlaufens einer Gewindepaarung die andere Gewindepaarung bzw. die anderen Gewindepaarungen nicht durchlaufen wird bzw. werden, also gewissermaßen eine starre Verbindung darstellt bzw. darstellen. Im dargestellten und insoweit bevorzugten Ausführungsbeispiel werden bei der Verstellung des Spindel-Spindelmutter-Getriebes 5 vom eingezogenen Zustand in den ausgezogenen Zustand die außenliegenden Gewindepaarungen nach den innenliegenden Gewindepaarungen durchlaufen. Im einzelnen ist es so, daß ausgehend von dem in Fig. 2 dargestellten, eingezogenen Zustand zunächst das Außengewinde 6a der Spindel 6 im Innengewinde 9a der Teleskophülse 9 läuft, so daß die Teleskophülse 9 und damit die Spindelmutter 7 relativ zum Spindelgehäuse 12 verstellt werden. Nach dem Durchlaufen dieser Gewindepaarung läuft das Außengewinde 9b der Teleskophülse 9 im Innengewinde 7a der Spindelmutter 7, so daß die Spindelmutter 7 relativ zur Teleskophülse 9 und damit weiter relativ zum Spindelgehäuse 12 verstellt wird. Der Übergang vom Durchlaufen der erstgenannten Gewindepaarung zum Durchlaufen der letztgenannten Gewindepaarung wird im folgenden noch näher erläutert.

In besonders bevorzugter Ausgestaltung ist es vorgesehen, daß die verschiedenen Gewindepaarungen unterschiedliche Reibwerte aufweisen, wobei die anfangs zu durchlaufende Gewindepaarung vorzugsweise einen geringeren Reibwert aufweist als die anschließend zu durchlaufende Gewindepaarung. Dies bedeutet, daß ausgehend von dem in Fig.-2 dargestellten, eingezogenen Zustand des Spindel-Spindelmutter-Getriebes 5 zunächst das Außengewinde 6a der Spindel 6 im Innengewinde 9a der Teleskophülse 9 läuft, da der Reibwert zwischen der Spindel 6 und der Teleskophülse 9 geringer ist als der Reibwert zwischen der Teleskophülse 9 und der verdrehfest angeordneten Spindelmutter 7. Selbstverständlich kann dies auch andersherum vorgesehen sein.

Die unterschiedlichen Reibwerte der verschiedenen Gewindepaarungen lassen sich beispielsweise durch unterschiedliche Werkstoffe und/oder Beschichtungen der beteiligten Komponenten, also der Spindel 6, der Teleskophülse 9 bzw. der Teleskophülsen und der Spindelmutter 7 realisieren.

Besondere Bedeutung kommt nun dem Übergang des Durchlaufens einer Gewindepaarung zum Durchlaufen der nachfolgenden Gewindepaarung zu. In bevorzugter Ausgestaltung ist es vorgesehen, daß nach dem Durchlaufen einer Gewindepaarung der das Außengewinde 6a, 9b dieser Gewindepaarung aufweisende Bestandteil 6, 9 mit dem das Innengewinde 9a, 7a dieser Gewindepaarung aufweisenden Bestandteil 9, 7 in blockierenden Eingriff kommt und daß dadurch die anschließend zu durchlaufende Gewindepaarung durchlaufen wird. Dies ist bei dem dargestellten Ausführungsbeispiel in besonders einfacher Weise realisiert. Hier ist es nämlich so, daß sich das Innengewinde 9a der Teleskophülse 9 ausschließlich über einen kurzen unteren Bereich 16 der Teleskophülse erstreckt und daß der übrige innenliegende Teil der Teleskophülse 9 als Lauffläche 17 für eine an der Spindel 6 angeordnete Lagerbuchse 18 dient. Die Lagerbuchse 18 liegt in Richtung der Spindelachse 8 an einem Absatz 19 an. Die Lauffläche 17 weist einen größeren Durchmesser als der Innendurchmesser des Innengewindes 9a der Teleskophülse 9 auf.

Wird nun ausgehend von dem in Fig. 2 dargestellten Zustand die Spindel 6 angetrieben, so läuft aufgrund der oben beschriebenen Auslegung der Reibwerte der Gewindepaarungen zunächst das Außengewinde 6a der Spindel 6 im Innengewinde 9a der Teleskophülse 9, bis die Lagerbuchse 18 das Innengewinde 9a der Teleskophülse 9 erreicht. Hierdurch kommt die Spindel 6 mit der Teleskophülse 9 in blockierenden Eingriff, so daß bei weiterer Drehung der Spindel 6 die Teleskophülse 9 nunmehr mitgedreht wird. Dies führt schließlich dazu, daß das Außengewinde 9b der Teleskophülse 9 im Innengewinde 7a der Spindelmutter 7 läuft.

Ausgehend von dem in Fig. 3 dargestellten ausgezogenen Zustand läßt sich das Spindel-Spindelmutter-Getriebe 5 durch den umgekehrten Antrieb der Spindel 6 wieder in den eingezogenen Zustand überführen. Dabei ist es vorgesehen, daß die zuvor beschriebene Blockierung zwischen der Spindel 6 und der Teleskophülse 9 auch zu einem vordefinierten Verklemmen dieser beiden Komponenten 6, 9 führt, so daß zunächst das Außengewinde 9b der Teleskophülse 9 im Innengewinde 7a der Spindelmutter 7 läuft, was zu einem ersten Zusammenziehen des Spindel-Spindelmutter-Getriebes 5 führt. Sobald die Teleskophülse 9 mit ihrer Stirnfläche 9c den Anschlag 20 am Spindelmuttergehäuse 14 erreicht, wird die Teleskophülse 9 gegenüber der Spindelmutter 7 blockiert. Bei weiterer Drehung der Spindel 6 wird die oben beschriebene Klemmung zwischen der Spindel 6 und der Teleskophülse 9 überwunden, so daß schließlich das Außengewinde 6a der Spindel 6 im Innengewinde 9a der Teleskophülse 9 läuft und das Spindel-Spindelmutter-Getriebe 5 in den in Fig. 2 dargestellten, eingezogenen Zustand überführt wird.

Die oben beschriebene Realisierung des sequentiellen Durchlaufens der Gewindepaarungen stellt eine konstruktiv besonders einfach realisierbare Variante dar. Hier sind auch andere Realisierungsmöglichkeiten denkbar.

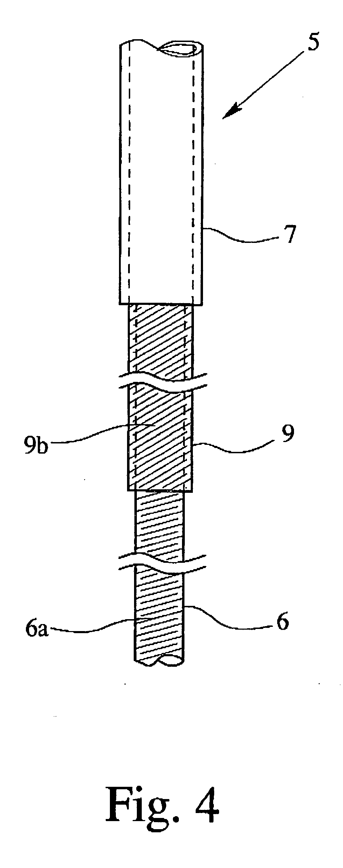

Es ist nun zusätzlich erkannt worden, daß das oben beschriebene, sequentielle Durchlaufen von Gewindepaarungen dazu genutzt werden kann, den Antrieb 3 der Antriebsanordnung 1 mit unterschiedlichen Getriebestufen auszustatten. Hierfür ist es vorgesehen, daß die verschiedenen Gewindepaarungen unterschiedliche Gewindesteigungen aufweisen. Dies ist ganz schematisch in Fig. 4 dargestellt. Beim sequentiellen Durchlaufen der Gewindepaarungen sind damit unterschiedliche Getriebestufen realisiert, die je nach aktuell durchlaufener Gewindepaarung wirksam bzw. unwirksam sind.

Besonders vorteilhaft ist die oben beschriebene Realisierung unterschiedlicher Getriebestufen bei der Ausgestaltung des Funktionselements 2 als Heckklappe 2 eines Kraftfahrzeugs. Dabei werden die Gewindesteigungen der Gewindepaarungen auf die Schließ- und Öffnungscharakteristik der Heckklappe 2 abgestimmt, so daß bei hohem Kraftbedarf eine Getriebestufe mit hoher Übersetzung und bei geringem Kraftbedarf eine Getriebestufe mit geringer Übersetzung wirksam ist. Die hiermit verbundenen Vorteile wurden weiter oben erläutert.

Nach einer besonders bevorzugten Ausgestaltung ist es ferner vorgesehen, daß die Übersetzung zusätzlich innerhalb einer Gewindepaarung veränderlich ist.

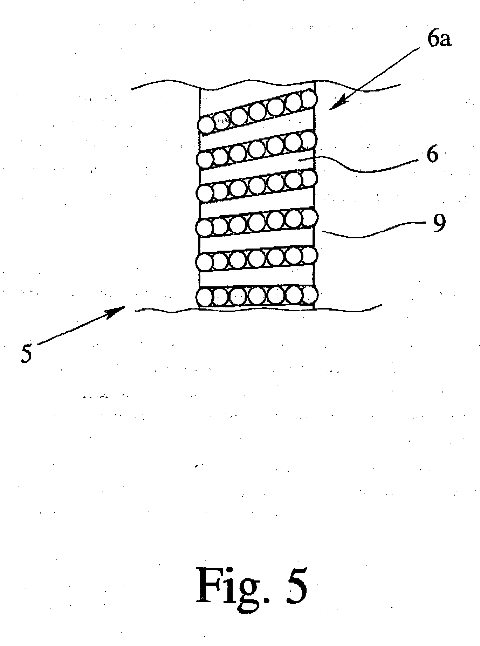

Dies ist beispielsweise dadurch realisierbar, daß die Gewindepaarung als Kugelgewindepaarung ausgestaltet ist, die über ihre Länge eine veränderliche Gewindesteigung ausweist. Dies ist ganz schematisch und nur ausschnittsweise in Fig. 5 dargestellt. Hier ist die Spindel 6 beispielhaft als Kugelgewindespindel ausgestaltet, die entsprechend mit der Teleskophülse 9 zusammenwirkt. Der Begriff "Kugelgewindepaarung" wurde im allgemeinen Teil der Beschreibung erläutert. Damit ist innerhalb der Gewindepaarung während des Durchlaufens der Gewindepaarung eine stufenlose Änderung der Übersetzung denkbar.

Es darf schließlich noch auf den strukturellen Aufbau des Antriebs 3 der Antriebsanordnung 1 hingewiesen werden, der sich als besonders kompakt herausgestellt hat. Hier ist es vorgesehen, daß zwischen der Spindel 6 und dem Antriebsmotor 4 ein Zwischengetriebe 21 und eine Kupplung 22 vorgesehen sind. Die Spindel 6, der Antriebsmotor 4, das Zwischengetriebe 21 mit Kupplung 22 sind entlang der Spindelachse 8 gesehen unmittelbar hintereinander angeordnet. Die Reihenfolge dieser Anordnung ergibt sich aus den Darstellungen in Fig. 2 und 3.

Das Spindel-Spindelmutter-Getriebe 5 ist ferner mit einer Federanordnung 23 ausgestattet, die eine Vorspannung zwischen dem Spindelgehäuse 12 und dem Spindelmuttergehäuse 14 in Richtung des ausgezogenen Zustands bewirkt. Hinsichtlich des strukturellen Aufbaus insbesondere der Federanordnung 23 darf auf die am 1. März 2005 beim Deutschen Patent- und Markenamt eingereichte Gebrauchsmusteranmeldung 20 2005 003 466.5 verwiesen werden, die auf die Anmelderin zurückgeht. Der Offenbarungsgehalt dieser Gebrauchsmusteranmeldung wird hiermit in vollem Umfange zum Gegenstand der vorliegenden Anmeldung gemacht.

## Patentansprüche

1. Antriebsanordnung zur motorischen Betätigung eines Funktionselements (2) in einem Kraftfahrzeug mit mindestens einem Antrieb (3), wobei der Antrieb (3) zur Erzeugung von linearen Antriebsbewegungen einen Antriebsmotor (4) und ein dem Antriebsmotor (4) nachgeschaltetes Spindel-Spindelmutter-Getriebe (5) aufweist, wobei das Spindel-Spindelmutter-Getriebe (5) eine Spindel (6) mit einem Außengewinde (6a) und eine Spindelmutter (7) mit einem Innengewinde (7a) aufweist, wobei die lineare Antriebsbewegung eine Bewegung der Spindelmutter (7) parallel zur Spindelachse (8) ist, wobei die Spindel (6) antriebstechnisch mit dem Antriebsmotor (4) gekoppelt ist, wobei das Funktionselement (2) als Heckklappe eines Kraftfahrzeugs ausgestaltet ist und wobei die Heckklappe (2) an der Karosserie des Kraftfahrzeugs um eine Schwenkachse (10) schwenkbar angelenkt und dadurch eine Klappenöffnung der Karosserie verschließbar ist,
**dadurch gekennzeichnet,**
**dass** das Spindel-Spindelmutter-Getriebe (5) mindestens eine Teleskophülse (9) mit einem Innengewinde (9a) und einem Außengewinde (9b) aufweist und dass innen die Spindel (6), weiter außen die Teleskophülse (9) bzw. die Teleskophülsen und ganz außen die Spindelmutter (7) teleskopartig und ineinanderschraubbar angeordnet sind, so dass jedes Außengewinde (6a, 9b) mit dem jeweils benachbarten Innengewinde (9a, 7a) eine Gewindepaarung bildet.

2. Antriebsanordnung nach Anspruch 1, **dadurch gekennzeichnet, dass** ein einziger Antrieb (3) vorgesehen ist und dass der Antrieb (3) an einem Seitenrand der Heckklappe (2) antriebstechnisch angreift, oder, dass zwei Antriebe (3) vorgesehen sind und dass die beiden Antriebe an den beiden Seitenrändern der Heckklappe (2) antriebstechnisch angreifen.

3. Antriebsanordnung nach Anspruch 1 oder 2, **dadurch gekennzeichnet, dass** die Spindel (6) in einem Lagerbock (11) drehbar gelagert ist, dass der Lagerbock (11) und die Spindelmutter (7) im eingebauten Zustand verdrehfest angeordnet sind.

4. Antriebsanordnung nach einem der vorhergehenden Ansprüche, **dadurch gekennzeichnet, dass** das Spindel-Spindelmutter-Getriebe (5) eine einzige Teleskophülse (9) aufweist, dass das Außengewinde (6a) der Spindel (6) in dem Innengewinde (9a) der Teleskophülse (9) läuft und dass das Außengewinde (9b) der Teleskaphülse (9) in dem Innengewinde (7a) der Spindelmutter (7) läuft.

5. Antriebsanordnung nach einem der Ansprüche 1 bis 3, **dadurch gekennzeichnet, dass** das Spindel-Spindelmutter-Getriebe mindestens zwei teleskopartig und ineinanderschraubbar angeordnete Teleskophülsen aufweist, dass das Außengewinde der Spindel in dem Innengewinde der innenliegenden Teleskophülse läuft und dass das Außengewinde der außenliegenden Teleskophülse in dem Innengewinde der Spindelmutter läuft.

6. Antriebsanordnung nach einem der vorhergehenden Ansprüche, **dadurch gekennzeichnet, dass** die Anordnung so getroffen ist, dass bei der motorischen Verstellung der Spindel (6) die einzelnen Gewindepaarungen in einer vorbestimmten Reihenfolge nacheinander durchlaufen werden, vorzugsweise, dass bei der Verstellung des Spindel-Spindelmutler-Getriebes (5) vom eingezogenen Zustand in den ausgezogenen Zustand die außenliegenden Gewindepaarungen nach den innenliegenden Gewindepaarungen durchlaufen werden.

7. Antriebsanordnung nach einem der vorhergehenden Ansprüche, **dadurch gekennzeichnet, dass** die verschiedenen Gewindepaarungen unterschiedliche Reibwerte aufweisen, vorzugsweise, dass die anfangs zu durchlaufende Gewindepaarung einen geringeren Reibwert aufweist als die anschließend zu durchlaufende Gewindepaarung, weiter vorzugsweise, dass die unterschiedlichen Reibwerte der verschiedenen Gewindepaarungen durch unterschiedliche Werkstoffe und/oder Beschichtungen der Spindel (6), der Teleskophülse (9) bzw. der Teleskophülsen und der Spindelmutter (7) realisiert sind.

8. Antriebsanordnung nach einem der vorhergehenden Ansprüche, **dadurch gekennzeichnet, dass** nach dem Durchlaufen einer Gewindepaarung der das Außengewinde (6a, 9b) dieser Gewindepaarung aufweisende Bestandteil (6, 9) mit dem das Innengewinde (9a, 7a) dieser Gewindepaarung aufweisenden Bestandteil (9, 7) in blockierenden Eingriff kommt und dass dadurch die anschließend zu durchlaufend Gewindepaarung durchlaufen wird.

9. Antriebsanordnung nach einem der vorhergehenden Ansprüche, **dadurch gekennzeichnet, dass** die verschiedenen Gewindepaarungen unterschiedliche Gewindesteigungen aufweisen, so dass beim sequentiellen Durchlaufen der Gewindepaarungen unterschiedliche Getriebestufen realisiert sind, vorzugsweise, dass die Gewindesteigungen der Gewindepaarungen auf die Schließ- und Öffnungscharakteristik des Funktionselements (2), insbesondere der Heckklappe (2), abgestimmt sind, so daß bei hohem Kraftbedarf eine Getriebestufe mit hohler Übersetzung und bei geringem Kraftbedarf eine Getriebestufe mit geringer Übersetzung wirksam ist.

10. Antriebsanordnung nach einem der vorhergehenden Ansprüche, **dadurch gekennzeichnet, dass** zumindest eine Gewindepaarung als Kugelgewindepaarung ausgestaltet ist und über ihre Länge eine veränderliche Gewindesteigung aufweist.

11. Antriebsanordnung nach einem der vorhergehenden Ansprüche, **dadurch gekennzeichnet, dass** zwischen der Spindel (6) und dem Antriebsmotor (4) ein Zwischengetriebe (21) und/oder eine Kupplung (22) vorgesehen ist bzw. sind.

12. Antriebsanordnung nach einem der vorhergehenden Ansprüche, **dadurch gekennzeichnet, dass** die Spindel (6), der Antriebsmotor (4) und das ggf. vorhandene Zwischengetriebe (21) mit der ggf. vorhandenen Kupplung (22) entlang der Spindelachse (8) gesehen unmittelbar hintereinander angeordnet sind.

## Claims

1. Drive arrangement for the motorized control of a functional element (2) in a motor vehicle with at least one drive (3), wherein, in order to generate linear driving movements, the drive (3) has a driving motor (4) and a spindle/spindle-nut gearing (5) which is connected downstream of the driving motor (4), wherein the spindle/spindle-nut gearing (5) has a spindle (6) with an external thread (6a) and a spindle nut (7) with an internal thread (7a), wherein the linear driving movement is a movement of the spindle nut (7) parallel to the spindle axis (8), wherein the spindle (6) is coupled in terms of drive to the driving motor (4), wherein the functional element (2) is configured as a tailgate of a motor vehicle, and wherein the tailgate (2) is coupled to the body of the motor vehicle so as to be pivotable about a pivot axis (10) and a flap opening in the body is thereby closable, **characterized in that** the spindle/spindle-nut gearing (5) has at least one telescopic sleeve (9) with an internal thread (9a) and an external thread (9b), and **in that** on the inside the spindle (6), further outwards the telescopic sleeve (9) or the telescopic sleeves and right on the outside the spindle nut (7) are arranged telescopically and so as to be screwable one into another in such a manner that each external thread (6a, 9b) forms a threaded pairing with the respectively adjacent internal thread (9a, 7a).

2. Drive arrangement according to Claim 1, **characterized in that** a single drive (3) is provided, and **in that** the drive (3) acts in terms of drive on a side edge of the tailgate (2), or **in that** two drives (3) are provided, and **in that** the two drives act in terms of drive on the two side edges of the tailgate (2).

3. Drive arrangement according to Claim 1 or 2, **characterized in that** the spindle (6) is mounted rotatably in a bearing block (11), and **in that** the bearing block (11) and the spindle nut (7) are arranged so as to be secure against torsion in the installed state.

4. Drive arrangement according to one of the preceding claims, **characterized in that** the spindle/spindle-nut gearing (5) has a single telescopic sleeve (9), **in that** the external thread (6a) of the spindle (6) runs in the internal thread (9a) of the telescopic sleeve (9), and **in that** the external thread (9b) of the telescopic sleeve (9) runs in the internal thread (7a) of the spindle nut (7).

5. Drive arrangement according to one of Claims 1 to 3, **characterized in that** the spindle/spindle-nut gearing has at least two telescopic sleeves arranged telescopically and so as to be screwable into one another, **in that** the external thread of the spindle runs in the internal thread of the inner telescopic sleeve, and **in that** the external thread of the outer telescopic sleeve runs in the internal thread of the spindle nut.

6. Drive arrangement according to one of the preceding claims, **characterized in that** the arrangement is made in such a manner that, during the motorized adjustment of the spindle (6), the individual threaded pairings are passed through successively in a predetermined sequence, preferably **in that**, during the adjustment of the spindle/spindle-nut gearing (5) from the retracted state into the extended state, the outer threaded pairings are passed through after the inner threaded pairings.

7. Drive arrangement according to one of the preceding claims, **characterized in that** the various threaded pairings have different coefficients of friction, preferably **in that** the threaded pairing to be passed through initially has a lower coefficient of friction than the threaded pairing to be passed through subsequently, further preferably **in that** the different coefficients of friction of the different threaded pairings are realized by different materials and/or coatings of the spindle (6), the telescopic sleeve (9) or the telescopic sleeves and the spindle nut (7).

8. Drive arrangement according to one of the preceding claims, **characterized in that**, after a threaded pairing has been passed through, the component (6, 9) having the external thread (6a, 9b) of said threaded pairing comes into locking engagement with the component (9, 7) having the internal thread (9a, 7a) of said threaded pairing, and **in that**, as a result, the threaded pairing to be passed through subsequently is passed through.

9. Drive arrangement according to one of the preceding claims, **characterized in that** the different threaded pairings have different threaded pitches, and therefore, during the sequential passage through the threaded pairings, different gearing stages are realized, preferably **in that** the threaded pitches of the threaded pairings are coordinated with the closing and opening characteristics of the functional element (2), in particular of the tailgate (2), such that, when a high level of force is required, a gearing stage having a high transmission ratio is effective and, when a low level of force is required, a gearing stage having a low transmission ratio is effective.

10. Drive arrangement according to one of the preceding claims, **characterized in that** at least one threaded pairing is configured as a spherical threaded pairing and has a variable threaded pitch over the length thereof.

11. Drive arrangement according to one of the preceding claims, **characterized in that** an intermediate gearing (21) and/or a clutch (22) are or is provided between the spindle (6) and the driving motor (4).

12. Drive arrangement according to one of the preceding claims, **characterized in that** the spindle (6), the driving motor (4) and the optionally present intermediate gearing (21) with the optionally present clutch (22) are arranged directly one behind another, as seen along the spindle axis (8).

## Revendications

1. Dispositif d'entraînement pour l'actionnement motorisé d'un élément fonctionnel (2) dans un véhicule automobile comprenant au moins un entraînement (3), l'entraînement (3) présentant, pour produire des mouvements d'entraînement linéaires, un moteur d'entraînement (4) et une transmission à broche et écrou de broche (5) montée en aval du moteur d'entraînement (4), la transmission à broche et écrou de broche (5) présentant une broche (6) avec un filetage extérieur (6a) et un écrou de broche (7) avec un filetage intérieur (7a), le mouvement d'entraînement linéaire étant un mouvement de l'écrou de broche (7) parallèlement à l'axe de la broche (8), la broche (6) étant accouplée par une technique d'entraînement au moteur d'entraînement (4), l'élément fonctionnel (2) étant configuré sous forme de hayon arrière d'un véhicule automobile, et le hayon arrière (2) étant articulé de manière à pouvoir pivoter autour d'un axe de pivotement (10) à la carrosserie du véhicule automobile et de ce fait une ouverture de hayon de la carrosserie pouvant être fermée,
**caractérisé en ce que**
la transmission à broche et écrou de broche (5) présente au moins une douille télescopique (9) avec un filetage intérieur (9a) et un filetage extérieur (9b) et **en ce qu'**à l'intérieur, la broche (6), plus à l'extérieur, la douille télescopique (9) ou les douilles télescopiques et, complètement à l'extérieur, l'écrou de broche (7) sont disposés de manière télescopable et de manière à pouvoir être vissés les uns dans les autres, de telle sorte que chaque filetage extérieur (6a, 9b) forme une paire filetée avec le filetage intérieur respectivement adjacent (9a, 7a).

2. Dispositif d'entraînement selon la revendication 1, **caractérisé en ce qu'**un entraînement unique (3) est prévu et **en ce que** l'entraînement (3) vient en prise par une technique d'entraînement au niveau d'un bord latéral du hayon arrière (2) ou **en ce que** deux entraînements (3) sont prévus et **en ce que** les deux entraînements viennent en prise par une technique d'entraînement au niveau des deux bords latéraux du hayon arrière (2).

3. Dispositif d'entraînement selon la revendication 1 ou 2, **caractérisé en ce que** la broche (6) est montée de manière à pouvoir tourner dans un bloc-palier (11), **en ce que** le bloc-palier (11) et l'écrou de broche (7) sont disposés de manière fixée en rotation dans l'état monté.

4. Dispositif d'entraînement selon l'une quelconque des revendications précédentes, **caractérisé en ce que** la transmission à broche et écrou de broche (5) présente une douille télescopique unique (9), **en ce que** le filetage extérieur (6a) de la broche (6) s'étend dans le filetage intérieur (9a) de la douille télescopique (9) et **en ce que** le filetage extérieur (9b) de la douille télescopique (9) s'étend dans le filetage intérieur (7a) de l'écrou de broche (7).

5. Dispositif d'entraînement selon l'une quelconque des revendications 1 à 3, **caractérisé en ce que** la transmission à broche et écrou de broche présente au moins deux douilles télescopiques disposées de manière télescopable et de manière à pouvoir être vissées l'une dans l'autre, **en ce que** le filetage extérieur de la broche s'étend dans le filetage intérieur de la douille télescopique située à l'intérieur et **en ce que** le filetage extérieur de la douille télescopique située à l'extérieur s'étend dans le filetage intérieur de l'écrou de broche.

6. Dispositif d'entraînement selon l'une quelconque des revendications précédentes, **caractérisé en ce que** le dispositif est prévu de telle sorte que lors du réglage motorisé de la broche (6), les paires filetées individuelles soient parcourues les unes après les autres dans une succession prédéterminée, de préférence **en ce que** lors du réglage de la transmission à broche et écrou de broche (5) de l'état rentré dans l'état sorti, les paires filetées situées à l'extérieur soient parcourues après les paires filetées situées à l'intérieur.

7. Dispositif d'entraînement selon l'une quelconque des revendications précédentes, **caractérisé en ce que** les différentes paires filetées présentent des coefficients de friction différents, de préférence **en ce que** la paire filetée devant être parcourue en premier présente un coefficient de friction inférieur à celui de la paire filetée devant être parcourue ensuite, et de préférence encore **en ce que** les différents coefficients de friction des différentes paires filetées sont réalisés par des matériaux différents et/ou par des revêtements différents de la broche (6), de la douille télescopique (9) ou des douilles télescopiques et de l'écrou de broche (7).

8. Dispositif d'entraînement selon l'une quelconque des revendications précédentes, **caractérisé en ce qu'**après qu'une paire filetée a été parcourue, le composant (6, 9) présentant le filetage extérieur (6a, 9b) de cette paire filetée vient en prise de verrouillage avec le composant (9, 7) présentant le filetage intérieur (9a, 7a) de cette paire filetée et **en ce que** de ce fait la paire filetée devant être parcourue ensuite est parcourue.

9. Dispositif d'entraînement selon l'une quelconque des revendications précédentes, **caractérisé en ce que** les différentes paires filetées présentent des pas de filetage différents, de telle sorte que lors du passage séquentiel des paires filetées, des étages de transmission différents soient réalisés, de préférence **en ce que** les pas de filetage des paires filetées sont adaptés à la caractéristique de fermeture et d'ouverture de l'élément fonctionnel (2), en particulier du hayon arrière (2), de telle sorte que, lors d'un besoin de force élevé, on dispose d'un étage de transmission à grande multiplication et, lors d'un besoin de force faible, on dispose d'un étage de transmission à faible multiplication.

10. Dispositif d'entraînement selon l'une quelconque des revendications précédentes, **caractérisé en ce qu'**au moins une paire filetée est configurée sous forme de paire filetée sphérique et présente un pas de filetage variable sur sa longueur.

11. Dispositif d'entraînement selon l'une quelconque des revendications précédentes, **caractérisé en ce qu'**entre la broche (6) et le moteur d'entraînement (4) est ou sont prévus une transmission intermédiaire (21) et/ou un embrayage (22).

12. Dispositif d'entraînement selon l'une quelconque des revendications précédentes, **caractérisé en ce que** la broche (6), le moteur d'entraînement (4) et la transmission intermédiaire (21) éventuellement présente avec l'embrayage (22) éventuellement présent sont disposés directement les uns derrière les autres, vu le long de l'axe de la broche (8).
